# FASCICULE DE BREVET EUROPEEN

(11) **EP 0 885 360 B1**
(45) Date de publication et mention de la délivrance du brevet: **10.09.2003**
(21) Numéro de dépôt: 97952977.3
(22) Date de dépôt: 22.12.1997
(51) Int. Cl.: F16F 15/123

(54) **AMORTISSEUR DE TORSION ET DISPOSITIF AMORTISSEUR EQUIPE D'UN TEL AMORTISSEUR DE TORSION**
TORSIONSSCHWINGUNGSDÄMPFER UND MIT SO EINEM TORSIONSSCHWINGUNGSDÄMPFER BEFASSTE DÄMPFUNGSVORRICHTUNG
TORQUE DAMPER AND DAMPING DEVICE EQUIPPED WITH SUCH A TORQUE DAMPER

(30) Priorité: 23.12.1996 FR 9615863
(43) Date de publication de la demande: 23.12.1998
(73) Titulaire: VALEO EMBRAYAGES s.a.s., 80009 Amiens Cedex 1 (FR)
(72) Inventeur: BACHER, Michel, F-95580 Andilly (FR); KOVAC, Josip, F-77330 Ozoir la Ferrière (FR); LUCSAK, Patrick, F-62131 Verquin (FR)
(74) Mandataire: Santarelli
(86) Numéro de dépôt international: FR9702384
(87) Numéro de publication internationale: WO98028553

(56) Documents cités:
- EP-A- 0 302 533
- FR-A- 1 228 977
- FR-A- 2 609 771
- GB-A- 2 105 002
- GB-A- 2 138 105
- US-A- 5 052 664
- PATENT ABSTRACTS OF JAPAN vol. 014, no. 127 (M-0947), 9 mars 1990 & JP 01 320330 A (MURATA HATSUJO KK), 26 décembre 1989,

## Description

### Etat de la technique

La présente invention concerne les amortisseurs de torsion et les dispositifs amortisseurs équipés de tels amortisseurs de torsion, tels que les dispositifs qui par exemple sont incorporés dans les frictions d'embrayage pour véhicules automobiles.

On connaît des frictions d'embrayage équipées d'un dispositif amortisseur de torsion comprenant deux amortisseurs de torsion : un amortisseur principal et un préamortisseur.

L'amortisseur principal comporte un élément d'entrée solidaire de deux rondelles de guidage disposées de part et d'autre d'un voile. Les rondelles de guidage sont reliées entre elles par des entretoises qui les solidarisent. L'élément d'entrée consiste, dans le cas d'une application à une friction d'embrayage, en un disque de support sur chacune des faces duquel sont fixées des garnitures de frottement destinées à être serrées entre les plateaux de pression et de réaction de l'embrayage.

En variante, l'élément d'entrée peut consister en un disque fixé directement sur le volant moteur du véhicule ; ce peut être également l'une des rondelles de guidage qui est prolongée radialement et fixée directement sur le volant moteur.

L'élément d'entrée, lorsqu'il s'agit d'un disque support de garnitures de frottement, est accolé à l'une des rondelles de guidage de l'amortisseur principal en étant fixé à celle-ci par les entretoises ou, en variante, par des rivets spécifiques.

Les entretoises traversent des échancrures ménagées à la périphérie du voile ; dans ce cas, la limitation du débattement angulaire entre le voile et les rondelles de guidage est réalisée par coopération des entretoises avec le bord des échancrures.

En variante, cette limitation est réalisée par venue à spires jointives de ressorts hélicoïdaux constituant des organes élastiques à action circonférentielle, ici de forte raideur, accouplant élastiquement les rondelles de guidage et le voile.

Les rondelles de guidage entourent l'élément de sortie du dispositif amortisseur constitué en général d'un moyeu cannelé intérieurement ; il en est de même du voile de l'amortisseur principal, qui lui engrène avec jeu avec le moyeu. L'amortisseur principal est donc attaqué cinématiquement directement par l'élément d'entrée.

Le préamortisseur est implanté entre le voile et l'une des rondelles de guidage de l'amortisseur principal, et ce radialement en dessous des ressorts de l'amortisseur principal.

Le préamortisseur est placé cinématiquement directement en amont de l'élément de sortie et comporte également deux rondelles de guidage disposées de part et d'autre d'un voile calé en rotation sur le moyeu à l'aide de dents. Des organes élastiques, tels que des ressorts hélicoïdaux, accouplent élastiquement le voile du préamortisseur à ses rondelles de guidage associées. Ce voile du préamortisseur est serti sur le moyeu.

Dans un tel dispositif à deux amortisseurs, les rondelles de guidage du préamortisseur sont liées en rotation au voile de l'amortisseur principal. Les ressorts à action circonférentielle du préamortisseur sont moins raides que les ressorts à action circonférentielle de l'amortisseur principal.

Le préamortisseur est adapté à filtrer les vibrations dans le domaine de ralenti du moteur, tandis que l'amortisseur principal est adapté à filtrer les vibrations dans le domaine de marche normale du véhicule, dit domaine de roulage, depuis le domaine de ralenti du moteur ; le préamortisseur peut être également adapté à filtrer les vibrations dans le domaine de roulage à faible couple moteur.

L'efficacité d'un dispositif amortisseur de torsion à l'égard des vibrations torsionnelles de basses fréquences dans le domaine de roulage du véhicule, à partir du ralenti du moteur jusqu'à 2500 tours par minute, par exemple, nécessite un grand débattement angulaire entre l'élément menant et l'élément mené, de l'ordre par exemple de 40 degrés, ce débattement s'effectuant à l'encontre des organes élastiques à action circonférentielle accouplant élastiquement les rondelles de guidage et le voile de l'amortisseur principal.

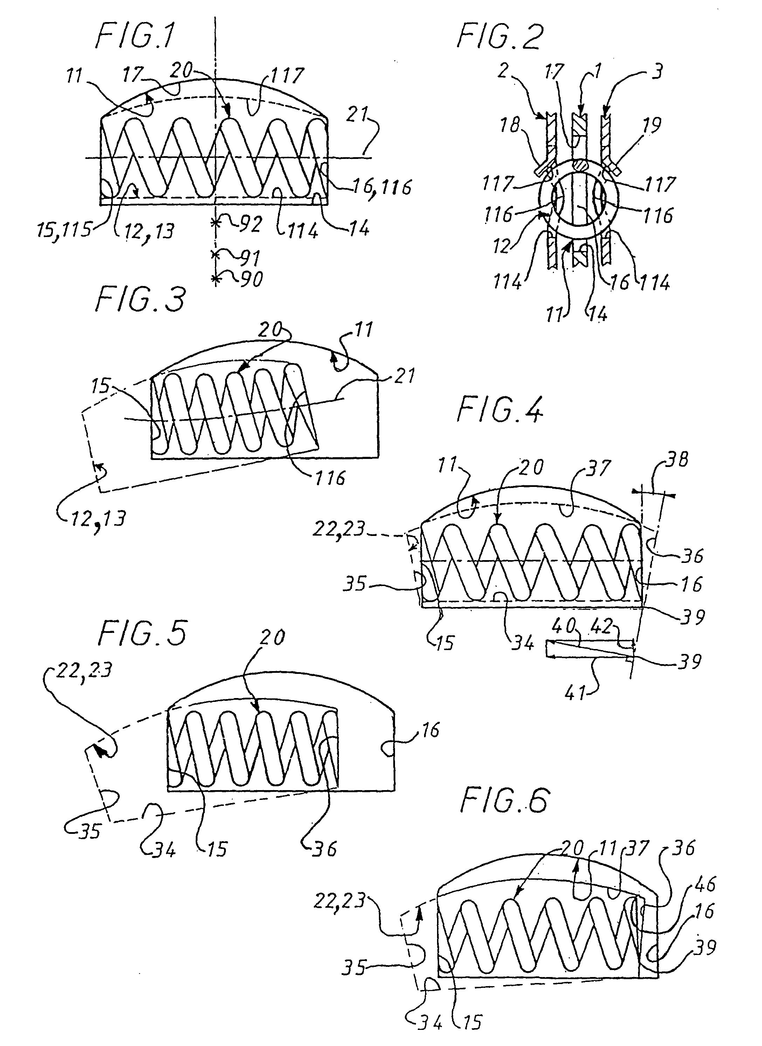

Généralement, les organes élastiques sont des ressorts hélicoïdaux disposés dans des fenêtres ménagées dans les rondelles de guidage et le voile, respectivement. Les trois fenêtres recevant un même ressort, à savoir les deux fenêtres des rondelles de guidage et la rondelle du voile, sont au droit l'une de l'autre; chacune de ces fenêtres présente un bord intérieur, deux bords latéraux ou d'appui, et un bord extérieur ; comme le montrent schématiquement les figures 1 et 2, reflétant l'état de la technique selon le préambule de la revendication 1, les fenêtres 11 du voile 1 et les fenêtres 12 et 13 des rondelles de guidage 2 et 3 ont respectivement un bord intérieur 14 et 114 et des bords latéraux 15, 16 et 115, 116 disposés selon les trois côtés d'un rectangle, le bord intérieur 14 ou 114 s'étendant selon la longueur dudit rectangle; le bord extérieur 17, 117 qui fait face au bord intérieur 14, 114 est de forme curviligne à concavité dirigée vers le bord intérieur 14, 114, autrement dit vers l'axe 90 autour duquel tournent en fonctionnement le voile 1 et les rondelles de guidage 2 et 3. Sur la figure 1, les contours de ces trois fenêtres ont été superposés en plan pour la commodité du dessin; en pratique, s'agissant notamment des fenêtres 12 et 13 des rondelles de guidage 2 et 3, les bords latéraux 115 et 116 sont décalés axialement par rapport aux bords intérieur 114 et extérieur 117, lequel appartient à une oeillère 18, 19, comme le montre la figure 2 ; sur la figure 1, le bord extérieur 117 et le bord intérieur 114 des fenêtres des rondelles de guidage ont été illustrés par une ligne représentant la projection selon l'axe 90, sur le plan de la figure, de la génératrice qui guide le ressort hélicoïdal 20 radialement; pour faciliter la lecture du dessin, la fenêtre du voile 11 est en traits pleins, les pointillés désignant une fenêtre ménagée dans les rondelles de guidage.

Le ressort hélicoïdal 20 est un ressort classique dont l'axe 21 est rectiligne ; lorsque le ressort 20 est placé dans les fenêtres 11, 12 et 13, son axe 21 est parallèle au bord intérieur 14, 114 desdites fenêtres et ses spires d'extrémité sont en appui sur les bords latéraux 15, 115 et 16, 116 desdites fenêtres. L'assise desdites spires d'extrémités est parfaite et lors du débattement angulaire relatif de l'élément d'entrée et de l'élément de sortie, c'est-à-dire du voile 1 et des rondelles de guidage 2 et 3, ces spires d'extrémité restent au contact desdits bords latéraux, sans déplacement relatif desdites spires par rapport audits bords latéraux ; il n'y a donc pas de frottements parasites, au niveau des bords latéraux 15, 115 et 16, 116 qui risqueraient de venir perturber les frottements internes calculés de l'amortisseur principal pour le réglage de son hystérésis.

Malheureusement, la disposition ci-dessus présente l'inconvénient qu'en fonctionnement, et en particulier en fin de débattement relatif angulaire, le ressort 20 lui-même se déforme en sorte que son axe 21, initialement rectiligne, prend une forme courbe, comme le montre la figure 3, dont la concavité est tournée vers l'extérieur; dès lors, le ressort 20 travaille dans de mauvaises conditions, le rayon moyen selon lequel se manifeste l'effort tangentiel dû aux ressorts 20 diminuant, et il est difficile de maîtriser en définitive cet effort.

On comprendra que cet inconvénient est d'autant plus important que les ressorts 20 sont de grande longueur. Bien entendu, pour éviter cet inconvénient, il est possible d'utiliser des ressorts de faible longueur, mais ceci nécessite, pour obtenir un grand débattement, un grand nombre de ressorts disposés en série, ce qui conduit à une construction complexe eu égard notamment au nombre important de pièces, à laquelle s'ajoute la difficulté de maîtriser les frottements parasites.

Pour éviter la déformation curviligne de l'axe 21 du ressort 20, notamment en fin de débattement, on a proposé d'associer à l'élément d'entrée et à l'élément de sortie des fenêtres différentes, les fenêtres de l'un de ces deux éléments ayant des bords latéraux ou d'appui faisant avec le bord intérieur un angle légèrement supérieur à un angle droit; plus précisément, comme le montre la figure 4, les fenêtres ménagées dans les rondelles de guidage, par exemple, les fenêtres 22, 23 sur la figure, ont des bords latéraux 35, 36 non parallèles mais inclinés qui font ainsi un angle 38 avec les bords latéraux 15, 16 des fenêtres 11 du voile 1 ; l'angle 38 est prévu tel que, lorsque l'élément d'entrée et l'élément de sortie ont effectué leur débattement relatif maximum, ce qui correspond à la venue en butée des colonnettes, qui assemblent les rondelles de guidage, avec les bords des échancrures du voile, les bords latéraux 15 et 36 sont parallèles, comme le montre la figure 5 ; ainsi, les extrémités du ressort 20 sont parallèles, ou quasiment parallèles, et le ressort 20 travaille dans de bonnes conditions.

Malheureusement, l'attaque du ressort 20 par les bords latéraux 36 inclinés, selon la figure 4, n'est pas centrée par rapport au ressort 20 puisqu'elle se produit dans la partie des spires d'extrémité proches de l'axe des éléments d'entrée et de sortie, schématisée par le point 39 sur les figures 4 et 6 ; dès lors, la poussée 40, en cette partie, sur le ressort 20 se décomposant en une composante 41 transversale parallèle à l'axe du ressort 20 et une composante 42 radiale, au début du débattement relatif le ressort 20 se déplace par rapport au bord 36 jusqu'à buter en 46 sur le bord extérieur 37 des fenêtres 22, 23: ceci conduit à des frottements parasites, dont les inconvénients ont déjà été décrits, et à une usure importante des pièces.

On comprendra que tout ce qui vient d'être dit est valable si les structures sont inversées, c'est-à-dire si l'élément d'entrée est solidaire du voile et l'élément de sortie solidaire des deux rondelles de guidage. De même, les ressorts hélicoïdaux pourraient être remplacés par des organes élastiques en matière élastomère telle que du caoutchouc, ou composite, par exemple adhérisée à deux coupelles d'extrémité.

La présente invention a pour objet d'éviter les inconvénients décrits ci-dessus inhérents aux dispositifs amortisseurs de torsion connus jusqu'ici.

### Résumé de l'invention

L'invention est definie par les caractéristiques de la revendication 1.

De préférence, l'axe des organes élastiques est une courbe curviligne en forme d'arc de cercle.

Selon une variante, l'axe des organes élastiques est constitué de deux demi-axes rectilignes faisant un angle obtus entre eux.

Selon une autre variante, l'axe des organes élastiques est constitué de trois segments rectilignes faisant deux à deux un angle obtus entre eux.

Selon une forme de réalisation, les spires d'extrémités des ressorts hélicoïdaux sont plus rapprochées que les autres spires.

Grâce à ces dispositions, l'amortisseur de torsion selon l'invention, tout en comportant des organes élastiques à action circonférentielle de grande longueur, n'est pas le siège de frottements parasites du fait que les organes élastiques sont attaqués selon leur axe, les usures des pièces s'en trouvant réduites au minimum; par ailleurs, les organes élastiques travaillent dans de bonnes conditions, notamment en fin de débattement où leurs faces d'extrémités sont parallèles.

Dans tout ce qui précède, il n'a pas été tenu compte des effets de la force centrifuge à laquelle sont soumis les organes élastiques en fonctionnement. Or, comme on le sait, alors que le couple transmis par les organes élastiques, par exemple les ressorts 20, est encore faible ou nul, le ressort 20 soumis à l'action de la force centrifuge a tendance à être progressivement, avec la vitesse, plaqué contre le bord extérieur des fenêtres des rondelles de guidage et/ou du voile tandis que parallèlement il se déforme en sorte que son axe 21, initialement rectiligne, prend une forme courbe dont la concavité est tournée vers l'intérieur.

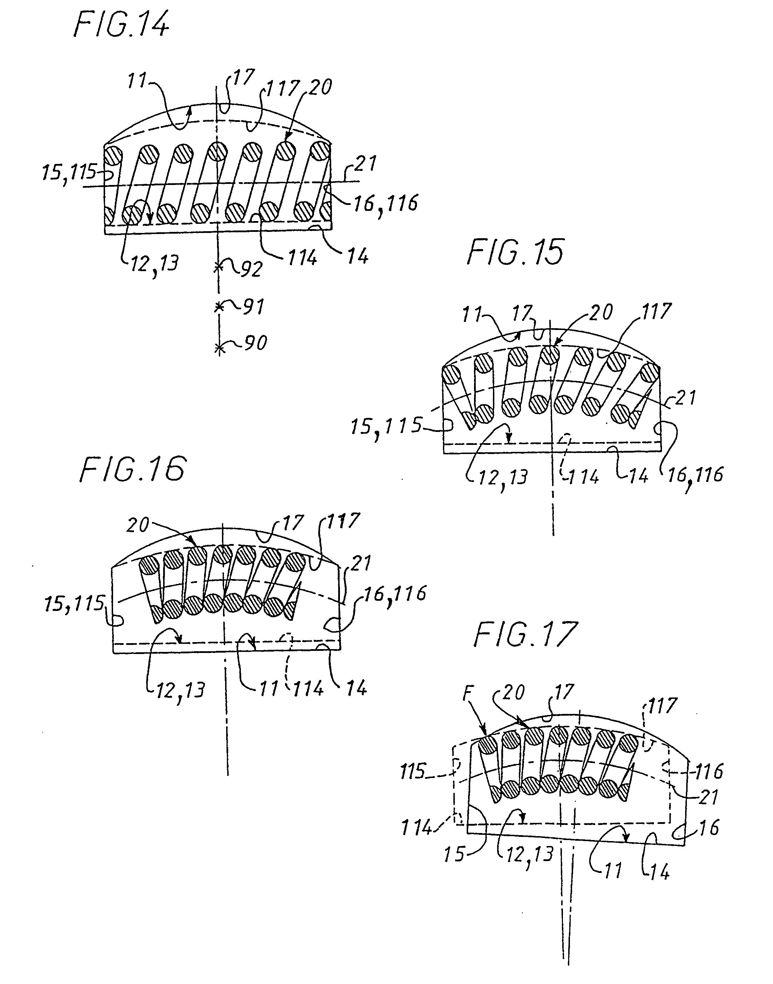

Ceci a pour conséquences que, d'une part, des frottements parasites sont introduits dans l'amortisseur et, d'autre part, les extrémités des organes élastiques quittent les bords d'appui des fenêtres : ainsi, lors du débattement relatif angulaire du voile et des rondelles de guidage, la maîtrise du couple transmis n'interviendra qu'après que les extrémités concernées aient repris contact avec les bords latéraux. Plus précisément, en se reportant à nouveau à la figure 2, ainsi qu'à la figure 14 qui est identique à la figure 1 sauf qu'ici le ressort 20 est représenté en coupe pour faciliter la compréhension du phénomène, on voit la réalisation la plus courante dans laquelle le rôle de guidage des ressorts 20 est confié entièrement aux rondelles de guidage 2 et 3 ; en effet, comme cela est visible sur ces figures, les spires d'extrémité des ressorts 20 en appui sur les bords latéraux 115, 116 sont centrées par les bords intérieur 114 et extérieur 117 à leur jonction avec les bords latéraux 115, 116 respectivement ; les oeillères 18, 19, donc le bord extérieur 1 17, sont semi-circulaires: le bord extérieur 117 est un arc de cercle centré en 91 qui est plus à l'extérieur par rapport à l'axe 90 ; dès lors, le bord extérieur 17 de la fenêtre 11 du voile 1 est un arc de cercle centré en 92, plus à l'extérieur par rapport au point 91 ; le bord extérieur 17 est dès lors un bord en dégagement par rapport au ressort 20 ; toutefois, les extrémités dudit bord extérieur 17 sont pratiquement tangentes à la spire d'extrémité du ressort 20 dans la zone de son raccordement aux bords latéraux 15 et 16 ; le bord intérieur 14 est légèrement plus à l'intérieur que ne le sont les bords intérieurs 114 des fenêtres 12, 13.

Sous l'effet de la force centrifuge, le ressort 20 prend, dans un premier temps, à couple transmis nul ou très faible, le moteur tournant au ralenti par exemple, une configuration telle que celle expliquée ci-dessus et illustrée par la figure 15 dans laquelle il est plaqué contre le bord extérieur 117 des fenêtres 12 et 13, son axe 21 devenant courbe et la partie intérieure des spires d'extrémité quittant les bords d'appui latéraux des fenêtres ; lorsque la vitesse augmente encore, le phénomène s'accentue, comme le montre la figure 16, les spires d'extrémité s'éloignant des bords latéraux; lorsque le voile 1 est déplacé par rapport aux rondelles de guidage 2 et 3, c'est le bord extérieur 17 de ses fenêtres 11 qui entre dans un premier temps en contact avec la spire d'extrémité du ressort 20, comme illustré sur la figure 17 par la flèche F ; cette spire d'extrémité se déplace, avec frottement, le long du bord extérieur du voile 1 jusqu'à trouver sa position d'appui sur le bord latéral 15 de la fenêtre 11 du voile 1 et ce n'est qu'à partir de l'instant où le ressort a retrouvé son appui sur les bords latéraux 15 et 1 16 que le couple est transmis normalement.

Bien entendu, un raisonnement analogue peut être fait lorsque la construction est telle que c'est le voile qui est choisi pour le guidage des ressorts au lieu des rondelles de guidage.

La présente invention a pour but d'éviter également ces inconvénients.

Selon un mode d'exécution de l'invention, ledit bord extérieur des fenêtres ménagées dans les rondelles de guidage ou dans le voile présente une portion décalée radialement vers l'axe de rotation des éléments d'entrée et de sortie et s'étendant circonférentiellement dans une zone non balayée par les extrémités des organes élastiques lors du débattement relatif, dans un sens ou dans l'autre, des éléments d'entrée et de sortie.

Avantageusement, ledit bord extérieur se raccorde aux bords latéraux par des portions en forme d'arc de cercle centré sur l'axe de rotation des éléments d'entrée et de sortie.

De préférence, entre la portion décalée intérieurement, d'une part, et chacune des portions de raccordement, d'autre part, le bord extérieur comporte des portions de dégagement décalées radialement vers l'extérieur.

Avantageusement, la portion décalée intérieurement est en forme d'arc de cercle dont le centre est situé vers l'extérieur par rapport à l'axe de rotation des éléments d'entrée et de sortie; les portions de dégagement sont des arcs de cercle appartenant au même cercle qui définit la portion décalée intérieurement.

Selon une forme préférée de réalisation, ledit bord extérieur est le bord extérieur des fenêtres ménagées dans les rondelles de guidage.

L'amortisseur selon l'invention convient bien pour une application à un véhicule automobile : l'élément d'entrée est destiné à être solidarisé ou solidarisable au volant moteur du véhicule, l'élément de sortie étant destiné à être relié à l'entrée de la boîte de vitesses du véhicule.

L'invention a également pour objet un dispositif amortisseur comprenant, d'une part, un amortisseur principal attaqué cinématiquement directement par l'élément d'entrée et, d'autre part, un préamortisseur placé directement en amont de l'élément de sortie, dans lequel l'amortisseur principal est un amortisseur de torsion tel que ci-dessus.

Pour mieux faire comprendre les objets de la présente invention, on va en décrire maintenant, à titre d'exemple, purement illustratif et non limitatif, des modes de réalisation représentés sur les dessins annexés.

### Brève description des dessins

Sur ces dessins:
- les figures 1 à 6 sont des schémas explicatifs relatifs à l'art antérieur déjà commentés ci-dessus ;
- la figure 7 est une vue partielle en coupe d'un embrayage selon l'invention ;
- la figure 8 est une vue partielle en plan montrant schématiquement les fenêtres et ressorts de l'embrayage de la figure 7 ;
- la figure 9 est une vue analogue à la figure 8, le débattement angulaire entre les éléments d'entrée et de sortie étant maximum ;
- la figure 10 est une vue en plan montrant un ressort seul selon l'invention ;
- les figures 11 à 13 montrent chacune une variante de ressort selon l'invention ;
- les figures 14 à 17 sont des schémas explicatifs relatifs à l'art antérieur, déjà commentés ci-dessus ;
- la figure 18 est une vue en plan d'une variante de fenêtres selon l'invention adaptée à résoudre également les problèmes liés à la force centrifuge ;
- la figure 19 est une vue en plan d'un disque de friction équipé de fenêtres selon la figure 18.

### Exemples de réalisation préférés

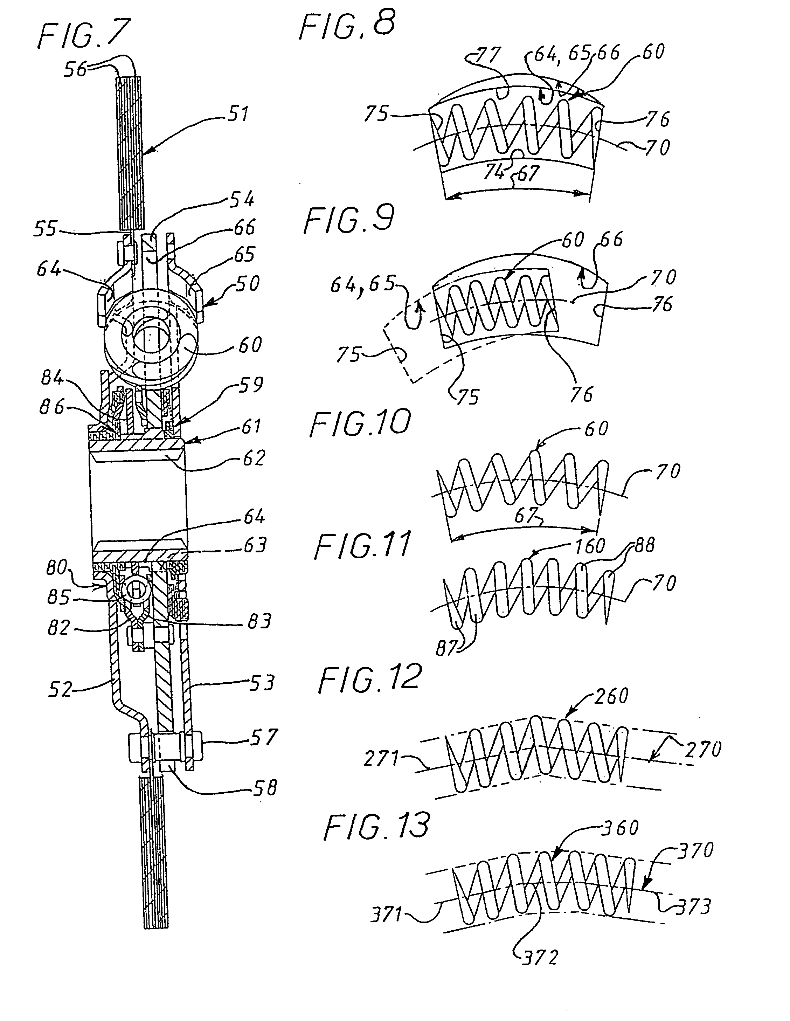

En se reportant à la figure 7, on voit un amortisseur principal 50 comportant un élément d'entrée 51 ici solidaire de deux rondelles de guidage 52, 53 disposées de part et d'autre d'un voile 54. Les rondelles de guidage 52, 53 sont reliées entre elles par des entretoises 57 qui les solidarisent. Des organes élastiques 60 à action circonférentielle, ici des ressorts hélicoïdaux, accouplent élastiquement le voile 54 aux rondelles de guidage 52, 53. L'élément d'entrée 51 consiste, dans ce cas d'application à une friction d'embrayage, en un disque de support 55 sur chacune des faces duquel sont fixées des garnitures de frottement 56 destinées à être serrées entre les plateaux de pression et de réaction de l'embrayage.

Le disque support 55 de garnitures de frottement est accolé à l'une des rondelles de guidage 52 de l'amortisseur principal 50 en étant fixé à celle-ci par les entretoises 57.

Les entretoises 57 traversent des échancrures 58 ménagées à la périphérie du voile 54 ; la limitation du débattement angulaire entre le voile 54 et les rondelles de guidage 52 et 53 est réalisée par coopération des entretoises 57 avec le bord des échancrures 58.

Les rondelles de guidage 52 et 53 entourent l'élément de sortie 61 du dispositif amortisseur constitué d'un moyeu cannelé intérieurement en 62 ; il en est de même du voile 54 de l'amortisseur principal 50, qui lui engrène avec jeu avec des cannelures extérieures 63 du moyeu 61 présentant une portion 64 de hauteur réduite à l'une de ses extrémités.

Le préamortisseur 80 est implanté entre le voile 54 et l'une des rondelles de guidage, ici la rondelle 52, de l'amortisseur principal 50, et ce radialement en dessous des ressorts 60 dudit amortisseur principal 50. Le préamortisseur 80 comporte également deux rondelles de guidage 82, 83 disposées de part et d'autre d'un voile 84 calé en rotation sur la portion 64 des cannelures 63 du moyeu 61. Des organes élastiques 85 à action circonférentielle, ici des ressorts hélicoïdaux, accouplent élastiquement les rondelles de guidage 82, 83 au voile 84. Ce voile 84 du préamortisseur 80 est serti sur le moyeu 61.

Les ressorts 85 du préamortisseur 80 sont moins raides que les ressorts 60 de l'amortisseur principal 50.

Le préamortisseur 80 est adapté à filtrer les vibrations notamment dans le domaine de ralenti du moteur, tandis que l'amortisseur principal 50 est adapté à filtrer 'es vibrations dans le domaine de marche normale du véhicule, dit domaine de roulage. Chacun des amortisseurs 50, 80 comporte un dispositif de frottement spécifique 59, 86 à action axiale et ce de manière connue en soi.

Les ressorts 60 de l'amortisseur principal sont placés dans des fenêtres placées en regard l'une des autres ménagées dans les rondelles de guidage 52, 53 et dans le voile 54. Pour ne pas compliquer le dessin, et faciliter l'explication, ces fenêtres ont été superposées sur le schéma de la figure 8, comme pour la figure 1. Les fenêtres 64, 65 sont ménagées dans les rondelles de guidage 52, 53, et la fenêtre 66 dans le voile 54. Ces fenêtres ont des bords latéraux 75 et 76 servant d'appui aux ressorts 60 ; selon l'invention, les bords latéraux 75, 76 de chacune des fenêtres 64, 65, 66 forment entre eux un angle 67 ouvert vers l'extérieur et l'axe 70 autour duquel sont enroulées les spires des ressorts 60 hélicoïdaux est une courbe non rectiligne à concavité dirigée vers l'axe de rotation commun des éléments d'entrée 51 et de sortie 61, en sorte que les faces d'appui des extrémités des ressorts 80 forment entre elles le même angle 67.

Selon la figure 8, l'axe 70 est une courbe curviligne en forme d'arc de cercle ; le ressort 60 de la figure 8 est représenté seul, à l'état de repos, sur la figure 10.

Les figures 11 à 13 montrent des variantes de ressorts; selon la figure 11, les spires du ressort 160 sont enroulées autour d'un axe 70 analogue à celui de la figure 9 mais ici les spires d'extrémité 87, d'une part, et 88, d'autre part, sont plus rapprochées que les autres spires du ressort 160 ; selon la variante de la figure 12, l'axe 270 du ressort 260 est constitué de deux demi-axes 271, 272 rectilignes faisant un angle obtus entre eux ; selon la variante de la figure 13, l'axe 370 du ressort 360 est constitué de trois segments 371, 372, 373 rectilignes faisant deux à deux un angle obtus entre eux.

Avantageusement, l'angle 67 que forment entre eux les bords latéraux 75, 76 des fenêtres 64, 65, 66 est tel que, lorsque les rondelles de guidage 52, 53 et le voile 54 ont effectué leur débattement relatif maximum en rotation, les bords latéraux 76 des fenêtres 64, 65 des rondelles de guidage 52, 53 sur lesquels s'appuie une extrémité des ressorts 60 et le bord latéral 75 de la fenêtre 66 du voile 54 sur lequel s'appuie l'autre extrémité des ressorts 60 sont parallèles, comme cela est illustré sur la figure 9.

Ainsi, grâce à l'invention, les ressorts 60 travaillent dans de bonnes conditions et les frottements parasites sont minimisés au maximum, voir éliminés. On appréciera par ailleurs que, les ressorts 60 ayant un axe 70 tel que défini ci-dessus, il est possible, comme cela est visible sur les figures 8 et 9, de donner au bord intérieur 74 des fenêtres une forme correspondante conduisant, à surfaces de fenêtres égales, à davantage de place circonférentiellement.

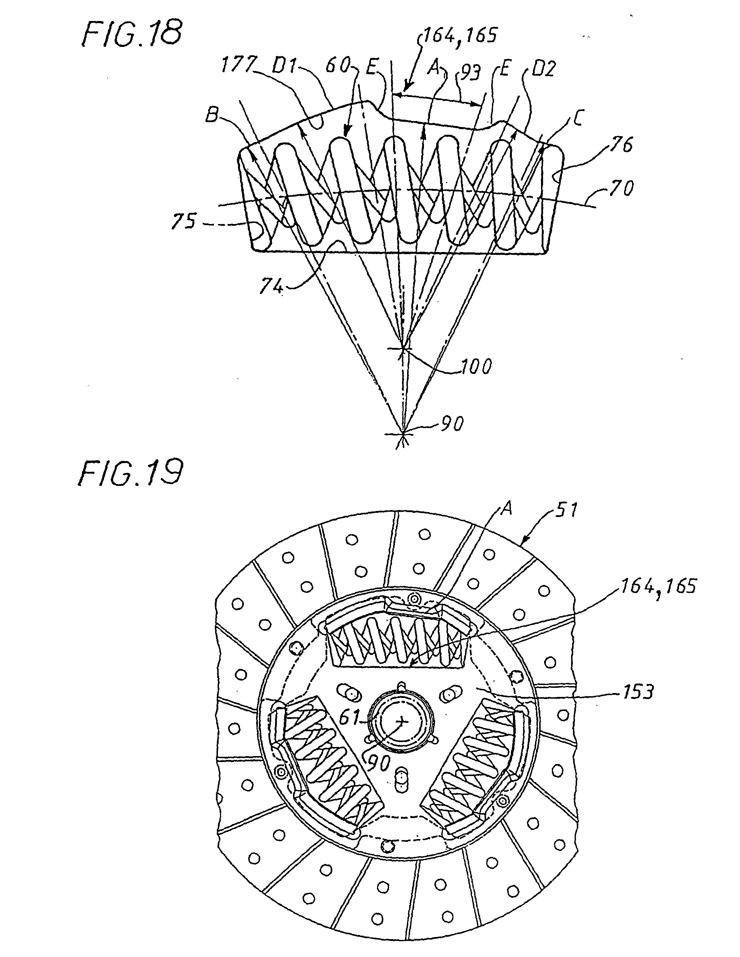

Les figures 18 et 19 montrent la variante selon laquelle il est de plus tenu compte de la force centrifuge à laquelle sont soumis les ressorts ; selon cette variante, le bord extérieur 177 des fenêtres 164, 165 ménagées dans les rondelles de guidage, l'une d'elles, la rondelle 153, étant visible sur la figure 19, présente une portion A décalée intérieurement, c'est-à-dire radialement vers l'axe 90 de rotation des éléments d'entrée 51 et de sortie 61. Ce décalage radial est tel que la portion A est la plus proche possible du contour extérieur du ressort 60 ; comme on le comprend aisément, cette portion A permet de limiter considérablement la déformation du ressort 60 sous l'effet de la force centrifuge ; cette portion A s'étend circonférentiellement dans une zone 93 qui n'est pas balayée par les spires d'extrémité du ressort 60 lors du débattement relatif des éléments d'entrée 51 et de sortie 61, ceci étant valable dans un sens ou dans l'autre, c'est-à-dire dans le sens moteur où le moteur du véhicule entraîne les roues de celui-ci et qui correspond à un déplacement des fenêtres du voile dans le sens horaire autour de l'axe 90, selon la figure 18, par rapport aux fenêtres des rondelles de guidage, ainsi que dans le sens rétro où les roues du véhicule sont menantes par rapport au moteur de celui-ci, ce qui correspond à un déplacement des fenêtres du voile dans le sens inverse par rapport au précédent; dans les deux cas ci-dessus, les débattements angulaires ne sont pas égaux, le débattement étant supérieur dans le premier cas : dès lors, comme le montre la figure 18, la portion A est décalée circonférentiellement dans le sens qui correspond au sens de rotation du moteur du véhicule.

L'invention prévoit également de raccorder le bord extérieur 177 aux bords latéraux 75, 76 par des portions B et C en forme d'arc de cercle dont le centre est confondu avec l'axe 90 de rotation des éléments d'entrée 51 et de sortie 61 : grâce à cette disposition, les spires d'extrémités resteront, malgré l'effet centrifuge, toujours maintenues dans l'angle formé par les côtés latéraux 75, 76 et les portions B et C, et, lors du débattement angulaire, l'attaque des ressorts par le voile se fera toujours par les bords latéraux des fenêtres du voile, c'est-à-dire sans frottements parasites, le bord extérieur des fenêtres du voile étant dégageant par rapport aux portions B et C.

Bien entendu, les portions A, d'une part, B et C, d'autre part, sont séparées par des portions de dégagement D, D2, c'est-à-dire décalées radialement vers l'extérieur par rapport à celles-ci.

Pour simplifier la construction, la portion décalée intérieurement A est en forme d'arc de cercle dont le centre 100 est situé vers l'extérieur par rapport à l'axe 90 ; pour la même raison, les portions de dégagement D1, D2 sont également des arcs de cercle appartenant au même cercle qui définit la portion décalée intérieurement A.

Bien entendu, dans tout ce qui précède, les moyens élastiques à action circonférentielle peuvent être constitués, dans chaque groupe de fenêtres, par un seul ressort hélicoïdal, ou par deux ressorts hélicoïdaux concentriques, comme montré sur les figures 7, 18 et 19.

## Revendications

1. Amortisseur de torsion disposé -entre deux éléments tournants, un élément d'entrée (51) et un élément de sortie (61), et comportant des organes élastiques (60) à action circonférentielle en forme de ressorts hélicoïdaux, deux rondelles de guidage (52, 53 - 153) associées à l'un (51) des éléments et disposées axialement de part et d'autre d'un voile (54) associé à l'autre (61) des éléments, les organes élastiques (60) à action circonférentielle ayant un axe (70) autour duquel sont enroulées les spires des ressorts (60) hélicoïdaux et agissant entre les deux rondelles de guidage (52, 53-153) et le voile (54) en étant placés dans des fenêtres (64 - 164, 65 - 165, 66) placées en regard l'une des autres ménagées dans les rondelles de guidage (52, 53 - 153) et dans le voile (54), lesdites fenêtres (64 - 164, 65 -165, 66) ayant deux bords latéraux (75, 76) sur lesquels sont adaptées à être en appui les extrémités des organes élastiques (60), les bords latéraux (75, 76) de chacune des fenêtres (64 - 164, 65 - 165) ménagées dans les rondelles de guidage (52, 53 - 153) formant entre eux un angle (67) ouvert vers l'extérieur, qui est le même que celui que forment entre eux les bords latéraux (75,76) des fenêtres (66) ménagées dans le voile (54), **caractérisé par le fait que** l'axe (70) des organes élastiques (60) est une courbe non rectiligne à concavité dirigée vers l'axe de rotation commun des éléments d'entrée (51) et de sortie (61), c'est-à-dire qu'en chaque point de la courbe la tangente à celle-ci est, par rapport à ladite courbe, située du côté opposé à celui où se trouve ledit axe (70), en sorte que les faces d'appui des extrémités desdits organes élastiques (60) forment entre elles un angle égal à celui (67) que forment entre eux les bords latéraux (75,76) des fenêtres (64-164, 65-165, 66), ledit angle (67) étant tel que, lorsque les rondelles de guidage (52, 53 - 153) et le voile (54) ont effectué leur débattement relatif maximum en rotation, les bords latéraux (75-76) des fenêtres (64 - 164, 65 - 165) des rondelles de guidage (52, 53 - 153) sur lesquels s'appuie une extrémité des organes élastiques (60) et le bord latéral (76-75) de la fenêtre (66) du voile (54) sur lequel s'appuie l'autre extrémité des organes élastiques (60) sont parallèles, l'axe (70) des organes élastiques (60) étant alors une courbe à concavité toujours dirigée vers l'axe de rotation commun des éléments d'entrée (51) et de sortie (61).

2. Amortisseur selon la revendication 1, **caractérisé par le fait que** l'axe (70) des organes élastiques (60) est une courbe curviligne en forme d'arc de cercle.

3. Amortisseur selon la revendication 1, **caractérisé par le fait que** l'axe (270) des organes élastiques (260) est constitué de deux demi-axes (271, 272) rectilignes faisant un angle obtus entre eux.

4. Amortisseur selon la revendication 1, **caractérisé par le fait que** l'axe (370) des organes élastiques (360) est constitué de trois segments (371, 372, 373) rectilignes faisant deux à deux un angle obtus entre eux.

5. Amortisseur selon l'une des revendications 1 à 4, **caractérisé par le fait que** les spires d'extrémités (87, 88) des ressorts (160) sont plus rapprochées que les autres spires.

6. Amortisseur selon l'une des revendications 1 à 5, **caractérisé par le fait que** le bord extérieur (177) des fenêtres ménagées dans les rondelles de guidage ou dans le voile présente une portion (A) décalée intérieurement, c'est-à-dire radialement vers l'axe (90) de rotation des éléments d'entrée (51) et de sortie (61), et s'étendant circonférentiellement dans une zone (93) non balayée par les extrémités des organes élastiques (60) lors du débattement relatif en rotation, dans un sens ou dans l'autre, des éléments d'entrée (51) et de sortie (61).

7. Amortisseur selon la revendication 6, **caractérisé par le fait que** ledit bord extérieur (177) se raccorde aux bords latéraux (75, 76) par des portions (B, C) en forme d'arc de cercle centré sur l'axe (90) de rotation des éléments d'entrée (51) et de sortie (61).

8. Amortisseur selon la revendications 7, **caractérisé par le fait qu'**entre la portion décalée intérieurement (A), d'une part, et chacune des portions de raccordement (B, C), d'autre part, le bord extérieur (177) comporte des portions de dégagement (D₁ , D₂) décalées radialement vers l'extérieur.

9. Amortisseur selon l'une des revendications 6 à 8, **caractérisé par le fait que** la portion décalée intérieurement (A) est en forme d'arc de cercle dont le centre (100) est situé vers l'extérieur par rapport à l'axe (90) de rotation des éléments d'entrée (51) et de sortie (61).

10. Amortisseur selon l'une des revendications 8 ou 9, **caractérisé par le fait que** les portions de dégagement (D₁, D₂) sont des arcs de cercle appartenant au même cercle qui définit la portion décalée intérieurement (A).

11. Amortisseur selon l'une des revendications 6 à 10, **caractérisé par le fait que** ledit bord extérieur (177) est le bord extérieur des fenêtres (164, 165) ménagées dans les rondelles de guidage (153).

12. Amortisseur selon l'une des revendications 1 à 11, **caractérisé par le fait qu'**il comporte un dispositif de frottement (59) associé aux organes élastiques.

13. Amortisseur selon l'une des revendications 1 à 12, pour véhicule automobile, **caractérisé par le fait que** l'élément d'entrée (51) est destiné à être solidarisé ou solidarisable au volant moteur du véhicule, l'élément de sortie (61) étant destiné à être relié à l'entrée de la boîte de vitesses du véhicule.

## Patentansprüche

1. Drehschwingungsdämpfer, der zwischen zwei umlaufenden Elementen, einem Eingangselement (51) und einem Ausgangselement (61), angeordnet ist, umfassend umfangsmäßig wirksame elastische Organe (60) in Form von Schraubenfedem, zwei Führungsscheiben (52, 53-153), die mit einem (51) der Elemente verbunden und axial beiderseits einer mit dem anderen (61) der Elemente verbundenen Mitnehmerscheibe (54) angeordnet sind, wobei die umfangsmäßig wirksamen elastischen Organe (60) eine Achse (70) haben, um die die Windungen der Schraubenfedern (60) gewickelt sind, und zwischen den beiden Führungsscheiben (52, 53-153) und der Mitnehmerscheibe (54) wirksam und in Fenstern (64-164, 65-165, 66) angeordnet sind, die einander gegenüberliegend in den Führungsscheiben (52, 53-153) und in der Mitnehmerscheibe (54) ausgebildet sind, wobei die besagten Fenster (64-164, 65-165, 66) zwei Seitenkanten (75, 76) aufweisen, auf denen die Enden der elastischen Organe (60) zur Anlage kommen können, wobei die Seitenkanten (75, 76) jedes der in den Führungsscheiben (52, 53-153) ausgebildeten Fenster (64-164, 65-165) untereinander einen nach außen offenen Winkel (67) bilden, der gleich ist wie der, den untereinander die Seitenkanten (75, 76) der in der Mitnehmerscheibe (54) ausgebildeten Fenster (66) bilden, **dadurch gekennzeichnet, dass** die Achse (70) der elastischen Organe (60) eine nicht geradlinige Kurve mit einer zur gemeinsamen Rotationsachse des Eingangs- (51) und Ausgangselements (61) gerichteten Einbuchtung ist, d.h. dass in jedem Punkt der Kurve die Tangente an diese sich relativ zu dieser Kurve auf der zur genannten Achse (70) entgegengesetzten Seite befindet, so dass die Auflageflächen der besagten elastischen Elemente (60) untereinander einen Winkel bilden, der gleich ist wie der Winkel (67), den die Seitenkanten (75, 76) der Fenster (64-164, 65-165, 66) untereinander bilden, wobei der besagte Winkel (67) so bemessen ist, dass, nachdem die Führungsscheiben (52, 53-153) und die Mitnehmerscheibe (54) ihre maximale relative Drehauslenkung vollzogen haben, die Seitenkanten (75-76) der Fenster (64-164, 65-165) der Führungsscheiben (52, 53-153), auf denen ein Ende der elastischen Organe (60) zur Auflage kommt, und die Seitenkante (76-75) des Fensters (66) der Mitnehmerscheibe (54), auf der das andere Ende der elastischen Organe (60) zur Auflage kommt, parallel verlaufen, wobei die Achse (70) der elastischen Organe (60) eine Kurve mit einer immer zur gemeinsamen Rotationsachse des Eingangselements (51) und Ausgangselements (61) gerichteten Einbuchtung ist.

2. Dämpfer nach Anspruch 1, **dadurch gekennzeichnet, dass** die Achse (70) der elastischen Organe (60) eine krummlinige Kurve in Form eines Kreisbogens ist.

3. Dämpfer nach Anspruch 1, **dadurch gekennzeichnet, dass** die Achse (270) der elastischen Organe (260) aus zwei geradlinigen Halbachsen (271, 272) besteht, die untereinander einen stumpfen Winkel bilden.

4. Dämpfer nach Anspruch 1, **dadurch gekennzeichnet, dass** die Achse (370) der elastischen Organe (360) aus drei geradlinigen Segmenten (371, 372, 373) besteht, die paarweise untereinander einen stumpfen Winkel bilden.

5. Dämpfer nach einem der Ansprüche 1 bis 4, **dadurch gekennzeichnet, dass** die Abschlusswindungen (87, 88) der Federn (160) dichter aneinander anliegen als die anderen Windungen.

6. Dämpfer nach einem der Ansprüche 1 bis 5, **dadurch gekennzeichnet, dass** die Außenkante (177) der in die Führungsscheiben oder in die Mitnehmerscheibe eingearbeiteten Fenster einen Abschnitt (A) aufweist, der nach innen, das heißt radial zur Rotationsachse (90) des Eingangs- (51) und Ausgangselements (61) hin versetzt ist und sich umfangsmäßig in einem Bereich (93) erstreckt, der bei der in der einen oder der anderen Richtung erfolgenden relativen Drehauslenkung der Eingangs- (51) und Ausgangselemente (61) nicht durch die Enden der elastischen Organe (60) gestreift wird.

7. Dämpfer nach Anspruch 6, **dadurch gekennzeichnet, dass** sich die besagte Außenkante (177) an die Seitenkanten (75, 76) durch Abschnitte (B, C) in Form eines auf die Rotationsachse (90) der Eingangs- (51) und Ausgangselemente (61) zentrierten Kreisbogens anschließt.

8. Dämpfer nach Anspruch 7, **dadurch gekennzeichnet, dass** die Außenkante (177) zwischen dem nach innen versetzten Abschnitt (A) einerseits und jedem der Anschlussabschnitte (B, C) andererseits radial nach außen versetzte Freigabeabschnitte (D₁, D₂) umfasst.

9. Dämpfer nach einem der Ansprüche 6 bis 8, **dadurch gekennzeichnet, dass** der nach innen versetzte Abschnitt (A) in Form eines Kreisbogens ausgebildet ist, dessen Mittelpunkt (100) im Verhältnis zur Rotationsachse (90) der Eingangs- (51) und Ausgangselemente (61) nach außen angeordnet ist.

10. Dämpfer nach Anspruch 8 oder 9, **dadurch gekennzeichnet, dass** die Freigabeabschnitte (D₁, D₂) Kreisbögen sind, die zu demselben Kreis gehören, der den nach innen versetzten Abschnitt (A) definiert.

11. Dämpfer nach einem der Ansprüche 6 bis 10, **dadurch gekennzeichnet, dass** die besagte Außenkante (177) die Außenkante der in die Führungsscheiben (153) eingearbeiteten Fenster (164, 165) ist.

12. Dämpfer nach einem der Ansprüche 1 bis 11, **dadurch gekennzeichnet, dass** er eine Reibungsvorrichtung (59) umfasst, die mit den elastischen Organen verbunden ist.

13. Dämpfer nach einem der Ansprüche 1 bis 12, für Kraftfahrzeuge, **dadurch gekennzeichnet, dass** das Eingangselement (51) für die feste oder lösbare Verbindung mit dem Schwungrad des Fahrzeugs bestimmt ist, während das Ausgangselement (61) für die Verbindung mit der Eingangswelle des Getriebes des Fahrzeugs bestimmt ist.

## Claims

1. Torsion damper disposed between two rotating elements, an input element (51) and an output element (61), and having circumferentially acting elastic members (60) in the form of helical springs, two guide washers (52, 53-153) associated with one (51) of the elements and disposed axially on each side of a disc (54) associated with the other one (61) of the elements, the circumferentially acting elastic members (60) having an axis (70) around which the turns of the helical springs (60) are wound and acting between the two guide washers (52, 53-153) and the disc (54) whilst being placed in windows (64-164, 65-165, 66) placed opposite each other and formed in the guide washers (52, 53-153) and in the disc (54), the said windows (64-164, 65-165, 66) having two lateral edges (75, 76) on which the ends of the elastic members (60) are adapted to be in abutment, the lateral edges (75, 76) of each of the windows (64-164, 65-165) formed in the guide washers (52, 53-153) forming between them an angle (67) open towards the outside, which is the same as that formed between the lateral edges of the windows (66) formed in the disc (54), **characterised by** the fact that the axis (70) of the elastic members (60) is a non-rectilinear curve with its concavity directed towards the common rotation axis of the input (51) and output (61) elements, that is to say that the tangent to each point of the curve is, with respect to the said curve, situated on the opposite side to said axis (70), so that the bearing faces of the ends of the said elastic members (60) form the same angle (67) between them as formed between the lateral edges (75, 76) of the windows (64-164, 65-165, 66), the said angle (67) being such that, when the guide washers (52, 53-153) and the disc (54) have effected their maximum relative movement in rotation, the lateral edges (75-76) of the windows (64-164, 65-165) in the guide washers (52, 53-153) on which one end of the elastic members (60) bear and the lateral edge (76-75) of the window (66) in the disc (54) on which the other end of the elastic members (60) bears are parallel, the axis (70) of the elastic members (60) then being a curve of which the concavity remains directed towards the common rotation axis of the input (51) and output (61) elements.

2. Damper according to Claim 1, **characterised by** the fact that the axis (70) of the elastic members (60) is a curvilinear curve in the shape of an arc of a circle.

3. Damper according to Claim 1, **characterised by** the fact that the axis (270) of the elastic members (260) consists of two rectilinear half-axes (271, 272) forming an obtuse angle between them.

4. Damper according to Claim 1, **characterised by** the fact that the axis (370) of the elastic members (360) consists of three rectilinear segments (371, 372, 373) forming, in pairs, an obtuse angle between them.

5. Damper according to one of Claims 1 to 4, **characterised by** the fact that the end turns (87, 88) of the springs (160) are closer together than the other turns.

6. Damper according to one of Claims 1 to 5, **characterised by** the fact that the external edge (177) of the windows formed in the guide washers or in the disc has a portion (A) offset internally, that is to say radially towards the rotation axis (90) of the input (51) and output (61) elements, and extending circumferentially in an area (93) which is not swept by the ends of the elastic members (60) during the relative rotational movement, in one direction or the other, of the input (51) and output (61) elements.

7. Damper according to Claim 6, **characterised by** the fact that the said external edge (177) is connected to the lateral edges (75, 76) by portions (B, C) in the shape of an arc of a circle centred on the rotation axis (90) of the input (51) and output (61) elements

8. Damper according to Claim 7, **characterised by** the fact that, between the internally offset portion (A) on the one hand and each of the connecting portions (B, C) on the other hand, the external edge (177) has clearance portions (D1, D2) offset radially towards the outside.

9. Damper according to one of Claims 6 to 8, **characterised by** the fact that the internally offset portion (A) is in the shape of an arc of a circle whose centre (100) is situated towards the outside with respect to the rotation axis (90) of the input (51) and output (61) elements.

10. Damper according to one of Claims 8 or 9, **characterised by** the fact that the clearance portions (D₁, D₂) are arcs of a circle belonging to the same circle which defines the internally offset portion (A).

11. Damper according to one of Claims 6 to 10, **characterised by** the fact that the said external edge (177) is the external edge of the windows (164, 165) formed in the guide washers (153).

12. Damper according to one of Claims 1 to 11, **characterised by** the fact that it comprises a friction device (59) associated with the elastic members.

13. Damper according to one of Claims 1 to 12, for an automotive vehicle, **characterised by** the fact that the input element (51) is intended to be attached or attachable to the vehicle engine flywheel, the output element (61) being intended to be connected to the input of the vehicle gearbox.
